# FASCICULE DE BREVET EUROPEEN

(11) **EP 1 688 332 B1**
(45) Date de publication et mention de la délivrance du brevet: **18.08.2010**
(21) Numéro de dépôt: 06000282.1
(22) Date de dépôt: 09.01.2006
(51) Int. Cl.: B60T 13/57, B60T 13/569

(54) **Servomoteur pneumatique à sièges décalés portés par deux douilles coulissantes**
Pneumatischer Kraftverstärker mit versetzten Ventilsitzen, die von zwei ineinander gleitenden Hülsen getragen werden
Pneumatic booster with offset valve seats carried by two sliding sleeves

(30) Priorité: 02.02.2005 FR 0501178
(43) Date de publication de la demande: 09.08.2006
(73) Titulaire: ROBERT BOSCH GMBH, 70442 Stuttgart (DE)
(72) Inventeur: Maligne, Jean-Charles, 93300 Aubervilliers (FR); Verbo, Ulysse, 08190 Sant Cugat (ES); Richard, Philippe, 77500 Chelles (FR)
(74) Mandataire: Hurwic, Aleksander Wiktor

(56) Documents cités:
- GB-A- 1 594 168
- US-A- 4 353 287
- US-A1- 2003 214 178

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure à la première pression, qui est susceptible de solliciter une tige d'actionnement d'un maître cylindre associé au servomoteur par l'intermédiaire d'un disque de réaction, du type qui comporte un piston mobile tubulaire qui est monté coulissant dans l'enveloppe et qui est solidaire de la cloison mobile, du type qui comporte une tige de commande se déplaçant dans le piston sélectivement en fonction d'un effort axial d'entrée exercé vers l'avant à l'encontre d'un effort de rappel exercé sur la tige par un ressort de rappel, du type dans lequel les mouvements de la tige de commande sont susceptibles de déterminer les ouvertures et fermetures d'au moins un clapet axial dit "d'admission" qui est interposé entre une source de pression soumise à la pression supérieure à la première pression et la chambre arrière, et d'au moins un clapet axial dit "de rééquilibrage", décalé axialement par rapport au clapet d'admission, qui est interposé entre la chambre avant et la chambre arrière, pour actionner la cloison mobile, et du type dans lequel un plongeur, monté coulissant dans le piston, traversant la cloison mobile et solidaire de l'extrémité de la tige de commande, est susceptible de solliciter directement la tige d'actionnement du maître-cylindre par l'intermédiaire du disque de réaction,
du type qui comporte:
- un premier élément transversal d'étanchéité du clapet axial d'admission, solidaire de l'extrémité arrière du plongeur,
- un premier élément transversal complémentaire d'étanchéité du clapet axial de rééquilibrage, constitué d'au moins une portion de la face arrière de la cloison mobile,

On connaît de nombreux exemples de servomoteurs du type décrit précédemment, par exemple du document US 2003/0214178 A1.

Dans de tels servomoteurs, le premier élément transversal d'étanchéité du clapet axial d'admission est généralement constitué d'une coupelle qui est sertie sur une portée cylindrique de l'extrémité arrière du plongeur. Le montage de cette- coupelle pose de grande difficultés lors de la fabrication du servomoteur.

En effet, cette coupelle doit être fixée au plongeur selon une position axiale déterminée pour garantir une ouverture satisfaisante du clapet d'admission.

Or, les opérations de sertissage entraînent généralement l'apparition de jeux axiaux qui sont préjudiciables au respect du positionnement axial de ladite coupelle par rapport au plongeur.

Pour remédier à cet inconvénient, l'invention propose une nouvelle conception de servomoteur dans laquelle le premier élément transversal d'étanchéité du clapet axial d'admission peut être monté selon une position axiale univoque par rapport au plongeur.

Dans ce but, l'invention propose un servomoteur du type décrit précédemment, caractérisé en ce qu'il comporte :
- un première douille tubulaire., fixée autour du plongeur dans le piston mobile, qui est rappelée élastiquement à l'opposé de la cloison mobile, dont une face transversale comporte le premier élément transversal d'étanchéité du clapet axial d'admission,
- une seconde douille tubulaire flottante, entourant la première douille, qui est mobile axialement par rapport au piston mobile, qui est rappelée élastiquement vers la cloison mobile, dont une face transversale interne arrière comporte un second élément complémentaire d'étanchéité du clapet axial d'admission, et dont une face transversale externe avant comporte un second élément extérieur complémentaire d'étanchéité du clapet de rééquilibrage,
la première douille étant montée coulissante dans le piston mobile selon une course qui est déterminée par de premiers moyens de montage à baïonnette interposés entre ladite première douille et le piston mobile et qui sont verrouillés en rotation par la seconde douille.

Selon d'autres caractéristiques de l'invention:
- le piston mobile comporte une portée tubulaire de guidage interposée radialement entre la première douille et la seconde douille,
- la portée tubulaire comporte une lumière, débouchant radialement de part et d'autre de ladite portée tubulaire, et débouchant axialement vers l'arrière de la portée, qui est destinée à coopérer avec un doigt faisant saillie radialement à l'extérieur de la première douille pour former les premiers moyens de montage à baïonnette et qui est destinée à coopérer avec une nervure faisant saillie radialement à l'intérieur de la seconde douille pour verrouiller lesdits premiers moyens de montage à baïonnette,
- la lumière comporte :
   - une première piste, d'une largeur correspondant à la largeur du doigt et/ou de la nervure, qui débouche à l'arrière de la portée tubulaire du piston mobile,
   - une seconde piste, communiquant avec la première piste, possédant un bord commun avec la première piste, et dont la largeur correspond au double de la largeur du doigt et ou de la nervure, et qui est destiné à recevoir le doigt et la nervure pour verrouiller angulairement ledit doigt,
- la seconde douille comporte une collerette avant d'extrémité dont une face transversale comporte le second élément transversal complémentaire d'étanchéité du clapet axial de rééquilibrage qui est destiné à obturer au moins un conduit de passage traversant la cloison mobile dont l'extrémité arrière comporte le premier élément transversal d'étanchéité du clapet axial de rééquilibrage,
- la collerette avant comporte, en avant de sa face transversale, un bord périphérique annulaire qui reçoit une rondelle immobilisée par l'intermédiaire de seconds moyens de montage à baïonnette,
- le bord périphérique annulaire de la collerette comporte au moins trois ergots radiaux qui sont tournés vers l'intérieur et qui sont répartis angulairement de manière régulière, et la rondelle comporte au moins trois ergots radiaux complémentaires qui sont tournés vers l'extérieur et qui sont répartis angulairement de manière régulière, pour former les seconds moyens de montage à baïonnette,
- le premier élément d'étanchéité du clapet axial d'admission est constitué de la face transversale arrière extérieure de la première douille,
- le second élément d'étanchéité du clapet axial d'admission est constitué d'un joint annulaire fixé sur une face avant intérieure d'une paroi arrière de la seconde douille tubulaire,
- le premier élément d'étanchéité du clapet axial de rééquilibrage est constitué d'au moins un pourtour de l'extrémité arrière du conduit de passage traversant la cloison mobile,
- l'extrémité arrière du plongeur comporte une portée tronconique convexe qui est destinée à coopérer avec une portée tronconique concave de la première douille pour assurer une position axiale déterminée de fixation de la première douille sur le plongeur.

D'autres caractéristiques et avantages de l'invention apparaîtront à la lecture de la description détaillée qui suit pour la compréhension de laquelle on se reportera aux dessins annexés dans lesquels :
- la figure 1 est une vue de détail d'un servomoteur selon un état antérieur de la technique;
- la figure 2 est une vue de détail en perspective d'un servomoteur selon l'invention avant son assemblage ;
- la figure 3 est une vue de détail en perspective d'un servomoteur selon l'invention après son assemblage ;
- la figure 4 est une vue en coupe axiale illustrant le fonctionnement du servomoteur dans une position de repos ou de relâchement, clapet d'admission fermé et clapet de rééquilibrage ouvert ;
- la figure 5 est une vue en coupe axiale illustrant le fonctionnement du servomoteur dans une position préparatoire à l'application d'un effort de freinage, clapet d'admission fermé et clapet de rééquilibrage fermé ;
- la figure 6 est une vue en coupe axiale illustrant le fonctionnement du servomoteur dans une position d'application d'un effort de freinage, clapet d'admission ouvert et clapet de rééquilibrage fermé,
- la figure 7 est une vue de détail en perspective des premiers moyens de montage à baïonnette.

Dans la description qui va suivre, des chiffres de référence identiques désignent des pièces identiques ou ayant des fonctions similaires.

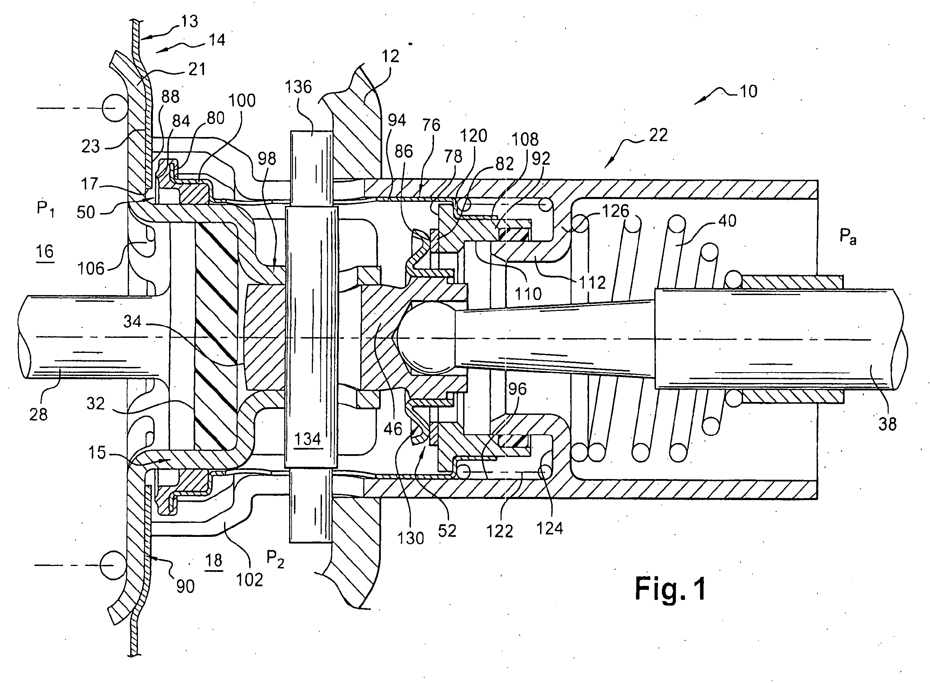

Par convention, les termes "avant", "arrière", supérieur", "inférieur" désignent respectivement des éléments ou des positions orientés respectivement vers la gauche, la droite, le haut, ou le bas des figures 1 à 6.

On a représenté à la figure 1 le détail d'un servomoteur 10 pneumatique conventionnel d'assistance au freinage pour un véhicule automobile.

De manière connue, un tel servomoteur 10 comporte une enveloppe 12 rigide à l'intérieur de laquelle est mobile une cloison 14 transversale délimitant de façon étanche une chambre avant 16, soumise à une première pression "P₁" et une chambre arrière 18 soumise à une deuxième pression "P₂" variant entre la première pression "P₁" et une pression "Pₐ" supérieure à la première pression "P₁", qui est susceptible de solliciter une tige 28 d'actionnement d'un maître cylindre (non représenté) qui est associé au servomoteur 10 par l'intermédiaire d'un disque 32 de réaction.

De manière connue, le servomoteur 10 comporte un piston 22 mobile tubulaire qui est monté coulissant dans l'enveloppe et qui est solidaire de la cloison 14 mobile. Le servomoteur 10 comporte une tige 38 de commande se déplaçant dans le piston 22 sélectivement en fonction d'un effort axial d'entrée exercé vers l'avant à l'encontre d'un effort de rappel exercé sur la tige 38 par un ressort 40 de rappel,

Les mouvements de la tige 38 de commande sont susceptibles de déterminer les ouvertures et fermetures d'au moins un clapet 52 axial dit "d'admission" qui est interposé entre une source de pression soumise à la pression "Pₐ" supérieure à la première pression "P₁" et la chambre arrière 18, et d'au moins un clapet axial 50 dit "de rééquilibrage", décalé axialement par rapport au clapet 52 d'admission, qui est interposé entre la chambre avant 16 et la chambre arrière 18, pour actionner la cloison 14 mobile.

Un plongeur 46, solidaire de l'extrémité de la tige 38 de commande, est monté coulissant dans le piston 22 et traverse la cloison 14 mobile. Ce plongeur 46 comporte une extrémité 34 conformée en palpeur, traversant le piston mobile 22, qui est susceptible de solliciter directement la tige 28 d'actionnement du maître-cylindre par l'intermédiaire du disque 32 de réaction.

L'extrémité arrière du plongeur 46 comporte un premier élément 86 transversal d'étanchéité du clapet 52 axial d'admission, et au moins une portion de la face arrière 90 de la cloison mobile comporte un premier élément 88 transversal complémentaire d'étanchéité du clapet axial 50 de rééquilibrage.

Par ailleurs, le servomoteur 10 comporte un élément 76 tubulaire flottant, extérieur au plongeur 46, qui est mobile axialement et qui est rappelé élastiquement vers la cloison 14 mobile. Des faces transversales 78, 80 de l'élément 76, décalées axialement, comportent respectivement des seconds éléments complémentaires 82, 84 d'étanchéité des clapets axiaux d'admission 52 et de rééquilibrage 50.

Par ailleurs, la cloison mobile 14 comporte une jupe 13 extérieure dont une portion de la face 90 arrière comporte le premier élément 88 transversal complémentaire d'étanchéité du clapet 50 axial de rééquilibrage, et un manchon 15 intérieur tubulaire, monté au travers d'un perçage 17 de la jupe 13 extérieure dont il est solidaire, qui reçoit le disque 32 de réaction, et dans lequel est monté coulissant le plongeur 46.

Le manchon 15 intérieur tubulaire comporte une portée tubulaire arrière 98 qui traverse le perçage 17 de la jupe 13 et une collerette 21 avant transversale de fixation qui est fixée, par exemple par soudage, sur une face avant 23 de la jupe 13.

Le second élément d'étanchéité 82 du clapet 52 axial d'admission est constitué d'un joint qui est porté par une douille 92 tubulaire rapportée qui est montée glissante dans l'extrémité arrière de l'élément tubulaire 76 flottant.

L'élément tubulaire flottant 76 comporte un tronçon intermédiaire 94 tubulaire, qui est monté coulissant dans un tronçon intermédiaire 96 du piston 22 sensiblement cylindrique et autour de la portée tubulaire 98 du manchon 15 intérieur tubulaire, et qui reçoit en coulissement le plongeur 46. La portée tubulaire 98 s'étend sensiblement axialement à partir de la face arrière 90 de la jupe 13 de la cloison mobile 14.

L'élément tubulaire flottant 76 comporte aussi un tronçon tubulaire 100 d'extrémité avant, d'un diamètre supérieur au diamètre du tronçon 94 intermédiaire, qui est reçu dans un tronçon avant 102 ajouré du piston 22 qui est agencé à la jonction du piston 22 et de la cloison mobile. Le tronçon avant 100 reçoit intérieurement un joint dont une face avant forme le second élément d'étanchéité 84 du clapet de rééquilibrage 50. Le second élément d'étanchéité 84 est destiné à coopérer avec la portion 88 de la face arrière 90 de la jupe 13, formant le premier élément d'étanchéité du clapet de rééquilibrage 50, qui est agencée radialement à l'extérieur d'une pluralité de perçages 106 de communication entre la chambre avant 16 et la chambre arrière 18 pratiqué dans le manchon 15 tubulaire intérieur, et donc radialement à l'extérieur du perçage 17 de la jupe 13, pour interrompre la communication entre les chambres avant 16 et arrière 18.

L'élément tubulaire flottant 76 comporte enfin un tronçon tubulaire 108 d'extrémité arrière, d'un diamètre inférieur au diamètre du tronçon 94 intermédiaire, qui reçoit intérieurement la douille 92 tubulaire dont la face transversale d'extrémité avant 78 porte le joint 82, formant le second élément 82 d'étanchéité du clapet 52 d'admission, qui est destiné à coopérer avec le premier élément d'étanchéité 86 porté par le plongeur 46. Un alésage 110 de la douille 92 entoure de manière étanche un conduit axial 112 d'admission du piston 22 communiquant avec la source de pression soumise à la pression "Pₐ" supérieure à la première pression "P₁".

Avantageusement, pour assurer le rappel élastique de l'élément 76 vers le cloison mobile 14, une face 120 d'épaulement délimitant le tronçon 94 tubulaire intermédiaire et le tronçon 108 tubulaire d'extrémité arrière de l'élément tubulaire reçoit en appui l'extrémité d'un ressort 122 de rappel dont l'autre extrémité est en appui sur une face 124 d'épaulement du piston tubulaire 22.

Le tronçon 96 intermédiaire du piston 22, d'un diamètre déterminé, comporte le conduit d'admission 112, d'un diamètre inférieur au diamètre déterminé, avec lequel il est venu de matière, et le conduit d'admission 112 est lié au tronçon intermédiaire 96 par l'intermédiaire d'une paroi transversale 126 venue de matière dont une face avant forme la face 124 d'épaulement recevant en appui le ressort 122 de rappel de l'élément tubulaire et dont la face arrière forme une face d'épaulement 128 recevant en appui le ressort de rappel 40 de la tige 38 de commande.

Le rappel en butée du plongeur 46 dans sa position de repos est assuré par une goupille 134 radiale de butée, dont les extrémités 136 extérieures au piston 22 sont susceptibles de prendre appui sur l'enveloppe 12 du servomoteur 10. La goupille 134 traverse le plongeur 46, la portée 98 tubulaire du manchon 15 intérieur tubulaire, l'élément 76, et deux lumières diamétralement opposées du piston 22 qui permettent de surcroît le passage de l'air de la chambre arrière 18 vers la chambre avant 16 lorsque le clapet 50 de rééquilibrage est ouvert, ou le passage de l'air du milieu extérieur en provenance du conduit 112 lorsque le clapet d'admission 52 est ouvert.

Le premier élément 86 transversal d'étanchéité du clapet axial d'admission est constitué d'une face arrière d'une coupelle 130 qui est montée serrée, par exemple au cours d'une opération de sertissage, sur l'extrémité arrière du plongeur cylindrique 46.

La face arrière 86 transversale de la coupelle 130, formant le premier élément d'étanchéité du clapet 52 d'admission, s'étend en regard du joint 82 formant le second élément transversal d'étanchéité.

Le fonctionnement d'un tel servomoteur 10 étant connu de l'état de la technique, il ne sera pas décrit en détail dans la suite de la présente description.

L'inconvénient d'un tel servomoteur 10 est que le montage de la coupelle 130 pose de grande difficultés lors de l'assemblage du servomoteur 10.

En effet, cette coupelle doit être fixée au plongeur 46 selon une position axiale déterminée pour garantir une ouverture satisfaisante du clapet 52 d'admission.

Or, les opérations de sertissage entraînent généralement l'apparition de jeux axiaux qui sont préjudiciables au respect du positionnement axial de ladite coupelle 130 par rapport au plongeur 46.

Pour remédier à cet inconvénient, l'invention propose une nouvelle conception de servomoteur 10 dans laquelle le premier élément 82 transversal d'étanchéité du clapet 52 axial d'admission peut être monté selon une position axiale univoque par rapport au plongeur 46.

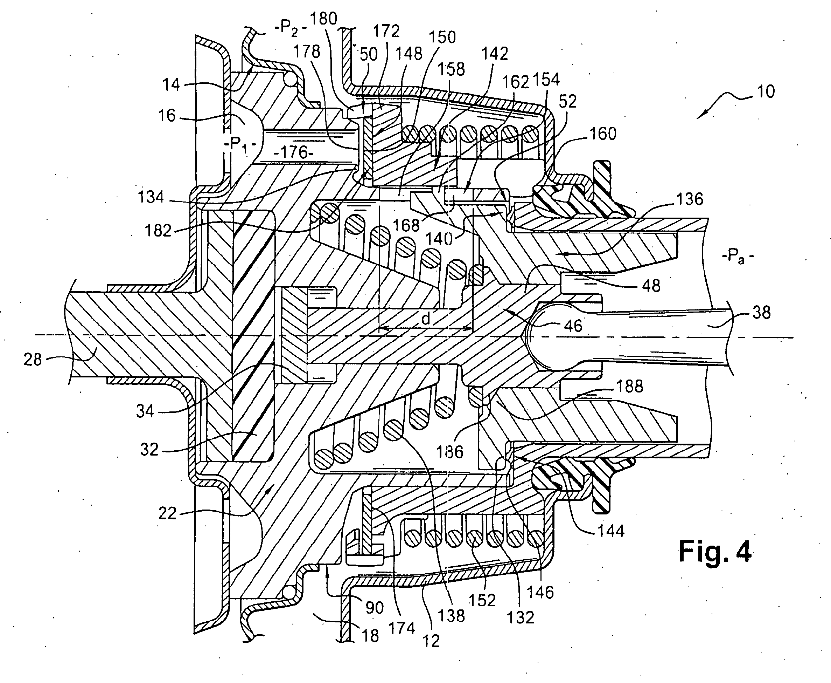

A cet effet, comme l'illustrent les figures 4 à 6, l'invention propose un servomoteur 10 reposant sur une conception tubulaire analogue à celle de l'état antérieur de la technique. D'une manière analogue au servomoteur 10 précédemment décrit, le servomoteur 10 selon l'invention comporte un premier élément 132 transversal d'étanchéité du clapet axial 52 d'admission, solidaire de l'extrémité 48 arrière du plongeur 46, et un premier élément 134 transversal complémentaire d'étanchéité du clapet 50 axial de rééquilibrage, constitué d'au moins une portion de la face arrière 90 de la cloison 14 mobile.

Toutefois, conformément à l'invention, le servomoteur 10 comporte :
- un première douille 136 tubulaire, fixée autour du plongeur 46 dans le piston 22 mobile, qui est rappelée élastiquement à l'opposé de la cloison mobile 14, par exemple par l'intermédiaire d'un ressort 138 de rappel, dont une face 140 transversale comporte le premier élément 132 transversal d'étanchéité du clapet 52 axial d'admission,
- une seconde douille 142 tubulaire flottante, entourant la première douille 136, qui est mobile axialement par rapport au piston mobile 22, qui est rappelée élastiquement vers la cloison mobile 14, dont une face transversale 144 interne arrière comporte un second élément 146 complémentaire d'étanchéité du clapet axial d'admission et dont une face transversale externe 148 avant comporte un second élément 150 extérieur complémentaire d'étanchéité du clapet 50 de rééquilibrage.

La seconde douille 142 est rappelée vers la cloison mobile 14 par l'intermédiaire d'un ressort 152 de rappel qui est agencé extérieurement à ladite seconde douille 142 et qui est interposé entre la seconde douille 142 et l'enveloppe 12 du servomoteur 10.

Le second élément 146 complémentaire d'étanchéité du clapet axial d'admission est par exemple constitué d'un joint qui est fixé à la face transversale 144 interne arrière de la seconde douille 142.

Le second élément 150 extérieur complémentaire d'étanchéité du clapet 50 de rééquilibrage sera décrit plus en détail dans la suite de la présente description.

Conformément à l'invention, la première douille 136 est montée coulissante dans le piston 22 mobile selon une course "d" qui est déterminée par de premiers moyens 154 de montage à baïonnette interposés entre ladite première douille 136 et le piston mobile 22 et qui sont verrouillés en rotation par la seconde douille 142 .

Pour permettre le guidage en coulissement de la douille 136, le piston mobile 22 comporte une portée 156 tubulaire de guidage interposée radialement entre la première douille 136 et la seconde douille 142.

Cette portée tubulaire 156 comporte une lumière 158, débouchant radialement de part et d'autre de ladite portée tubulaire 156, et débouchant axialement vers l'arrière 160 de la portée 156, qui est destinée à coopérer avec un doigt 162 faisant saillie radialement à l'extérieur de la première douille 136 pour former les premiers moyens 154 de montage à baïonnette.

La lumière 158 est aussi destinée à coopérer avec une nervure 164 faisant saillie radialement à l'intérieur de la seconde douille pour verrouiller lesdits premiers moyens de 154 montage à baïonnette.

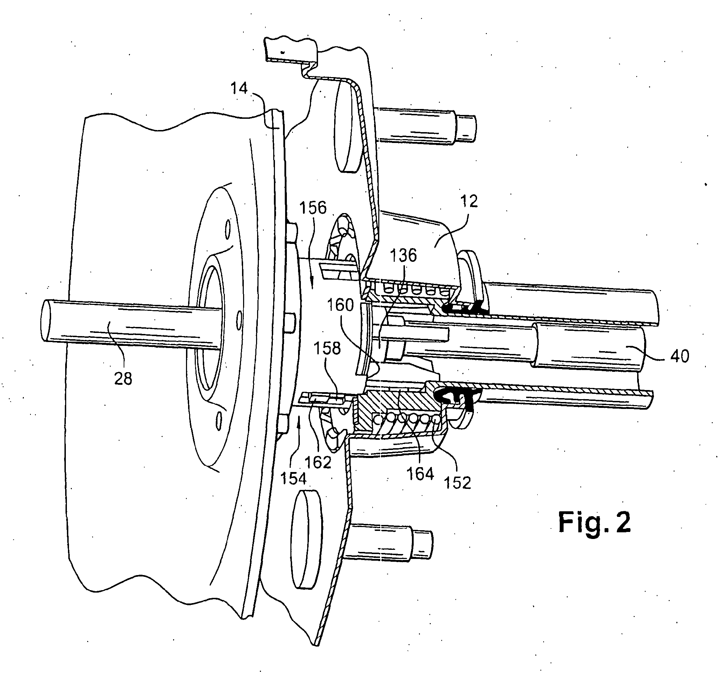

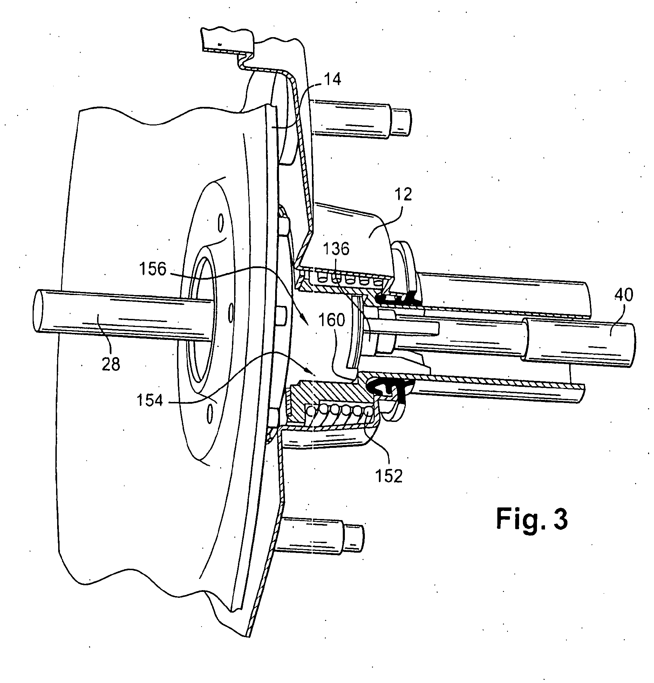

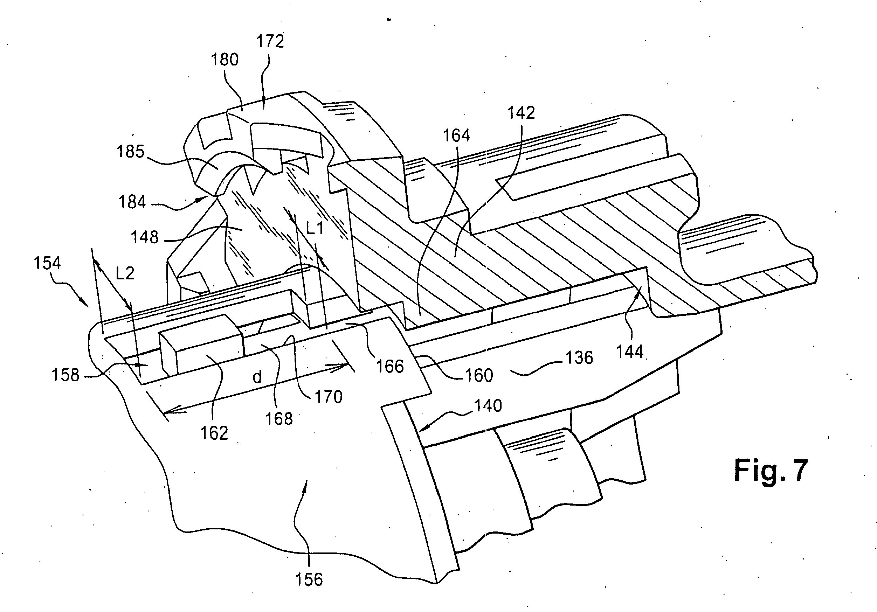

A cet effet, comme l'illustrent les figures 2 et 3 qui représentent respectivement le servomoteur avant et après assemblage des moyens 154 à baïonnette, et plus particulièrement la figure 7, la lumière 158 comporte :
- une première piste 166, d'une largeur "L1" correspondant à la largeur du doigt 162 et/ou de la nervure 164, qui débouche à l'arrière 160 de la portée tubulaire 156 du piston mobile 22,
- une seconde piste 168, communiquant avec la première piste 166, possédant un bord commun 170 avec la première piste 166, et dont la largeur "L2" correspond au double de la largeur "L1" du doigt 162 et ou de la nervure 164, et qui est destiné à recevoir le doigt 162 et la nervure 164 pour verrouiller angulairement ledit doigt 162. Une fois monté, le doigt 162 est mobile dans la seconde piste selon sa course "d".

Avantageusement, la seconde douille 142 comporte une collerette avant 172 d'extrémité dont la face 148 transversale externe comporte le second élément 150 transversal complémentaire d'étanchéité du clapet 50 axial de rééquilibrage qui est destiné à obturer au moins un conduit 176 de passage traversant la cloison mobile 14 dont l'extrémité arrière 178 comporte le premier élément 134 transversal d'étanchéité du clapet 50 axial de rééquilibrage.

Plus particulièrement, le premier élément 134 d'étanchéité du clapet axial de rééquilibrage est constitué d'au moins un pourtour de l'extrémité arrière 178 du conduit 176 de passage traversant la cloison mobile 14.

En regard du conduit 176, la collerette avant 172 comporte, en avant de sa face transversale 174, un bord périphérique annulaire 180 qui reçoit une rondelle 182 immobilisée par l'intermédiaire de seconds moyens 184 de montage à baïonnette,

A cet effet, la collerette 172 comporte au moins trois ergots 185 radiaux tournés vers l'intérieur et répartis angulairement de manière régulière, et la rondelle 182 comporte au moins trois ergots radiaux complémentaires (non représentés) tournés vers l'extérieur et répartis angulairement de manière régulière, pour former les seconds moyens 184 de montage à baïonnette.

En variante, la rondelle peut aussi ne pas comporter d'ergots radiaux complémentaires et peut être montée directement par déformation entre les ergots radiaux 185.

Cette conception permet de réaliser d'une manière très simple les moyens d'étanchéité du clapet de rééquilibrage 50.

D'une manière analogue, le premier élément d'étanchéité 132 du clapet axial 52 d'admission est constitué de la face transversale arrière 140 extérieure de la première douille 136.

Enfin, pour faciliter la fixation de la première douille 136 sur le plongeur 46 et déterminer précisément sa position axiale par rapport au dit plongeur 46, l'extrémité arrière 48 du plongeur 46 comporte une portée tronconique 186 convexe qui est destinée à coopérer avec une portée tronconique 188 concave de la première douille 136. La première douille 136 est montée serrée ou vissée à l'arrière du plongeur 46.

Dans cette configuration, les servomoteur 10 est susceptible d'occuper trois configurations de fonctionnement comme représenté aux figures 4 à 6.

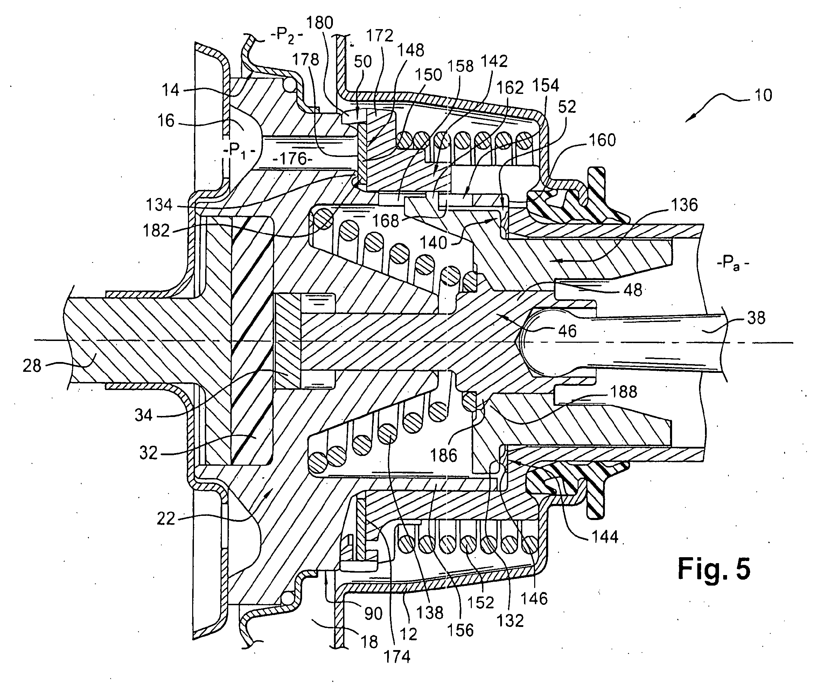

A partir de la position de repos de la figure dans laquelle la clapet d'admission 52 est fermé et le clapet de rééquilibrage 50 est ouvert, l'application d'un effort de freinage sur la tige 38 provoque le passage à une position préparatoire à l'application d'un effort de freinage qui est associée à la fermeture du clapet 50 de rééquilibrage, le clapet 52 d'admission restant fermé, comme représenté à la figure 5.

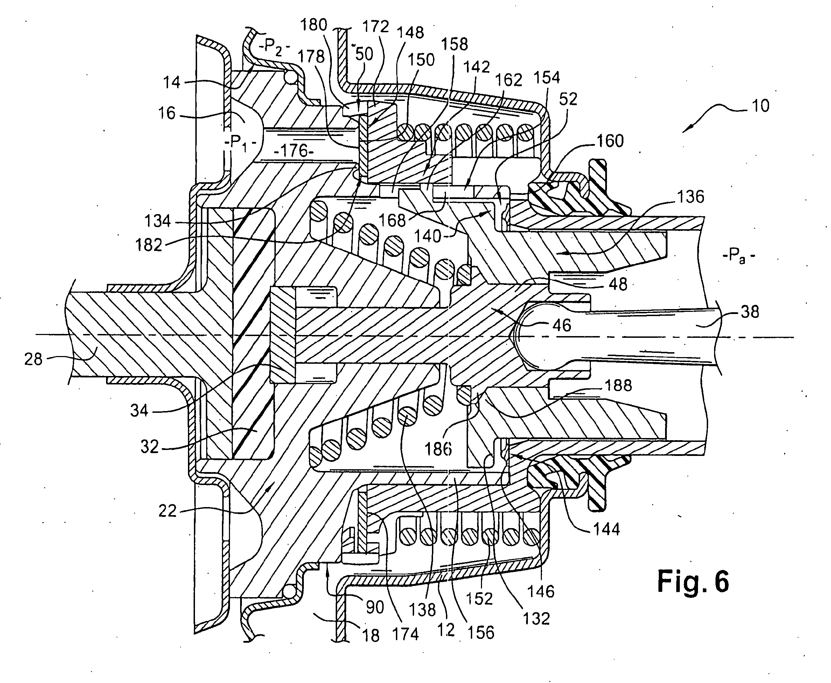

Puis, en poursuivant l'effort sur la tige 38, le servomoteur passe à une position d'application de l'effort de freinage, comme représenté à la figure 6, dans laquelle le clapet 50 de rééquilibrage demeure fermé et dans laquelle le clapet 52 d'admission s'ouvre.

Le relâchement de la tige de commande provoque la fermeture du clapet d'admission 52 puis la réouverture du clapet de rééquilibrage pour revenir à la position de repos de la figure 4.

L'invention permet donc de simplifier l'assemblage du premier élément d'étanchéité du clapet 52 d'admission porté par le plongeur tout en proposant un servomoteur 10 doté de sièges d'admission 52 et d'équilibrage 50 décalés qui est particulièrement compact.

## Revendications

1. Servomoteur (10) pneumatique d'assistance au freinage pour un véhicule automobile,
du type qui comporte une enveloppe (12) rigide à l'intérieur de laquelle est mobile une cloison (14) transversale délimitant de façon étanche une chambre avant (16), soumise à une première pression (P₁), et une chambre arrière (18) soumise à une deuxième pression (P₂) variant entre la première pression (P₁) et une pression (Pₐ) supérieure à la première pression (P₁), qui est susceptible de solliciter une tige (28) d'actionnement d'un maître cylindre associé au servomoteur (10) par l'intermédiaire d'un disque (32) de réaction,
du type qui comporte un piston (22) mobile tubulaire qui est monté coulissant dans l'enveloppe (12) et qui est solidaire de la cloison (14) mobile,
du type qui comporte une tige (38) de commande se déplaçant dans le piston (22) sélectivement en fonction d'un effort axial d'entrée exercé vers l'avant à l'encontre d'un effort de rappel exercé sur la tige (38) par un ressort (138) de rappel,
du type dans lequel les mouvements de la tige (38) de commande sont susceptibles de déterminer les ouvertures et fermetures d'au moins un clapet (52) axial dit "d'admission" qui est interposé entre une source de pression soumise à la pression (Pₐ) supérieure à la première pression (P₁) et la chambre arrière (18), et d'au moins un clapet axial (50) dit "de rééquilibrage", décalé axialement par rapport au clapet (52) d'admission, qui est interposé entre la chambre avant (16) et la chambre arrière (18), pour actionner la cloison (14) mobile,
et du type dans lequel un plongeur (46), monté coulissant dans le piston (22), traversant la cloison (14) mobile et solidaire de l'extrémité de la tige (38) de commande, est susceptible de solliciter directement la tige (28) d'actionnement du maître-cylindre (13) par l'intermédiaire du disque (32) de réaction,
du type qui comporte :
- un premier élément (132) transversal d'étanchéité du clapet (52) axial d'admission, solidaire de l'extrémité arrière (48) du plongeur (46),
- un premier élément (134) transversal complémentaire d'étanchéité du clapet (50) axial de rééquilibrage, constitué d'au moins une portion de la face arrière (90) de la cloison (14) mobile,
**caractérisé en ce qu'**il comporte :
- une première douille (136) tubulaire, fixée autour du plongeur (46) dans le piston (22) mobile, qui est rappelée élastiquement à l'opposé de la cloison mobile (14), dont une face (140) transversale comporte le premier élément (132) transversal d'étanchéité du clapet (52) axial d'admission,
- une seconde douille (142) tubulaire flottante, entourant la première douille (136), qui est mobile axialement par rapport au piston mobile, qui est rappelée élastiquement vers la cloison mobile (14), dont une face transversale (144) interne arrière comporte un second élément (146) complémentaire d'étanchéité du clapet axial (52) d'admission, et dont une face (148) ,transversale externe avant comporte un second élément extérieur (150) complémentaire d'étanchéité du clapet (50) de rééquilibrage,
la première douille (136) étant montée coulissante dans le piston mobile (22) selon une course (d) qui est déterminée par de premiers moyens (154) de montage à baïonnette interposés entre ladite première douille (136) et le piston mobile (22) et qui sont verrouillés en rotation par la seconde douille (142).

2. Servomoteur (10) selon la revendication précédente, **caractérisé en ce que** le piston mobile (22) comporte une portée (156) tubulaire de guidage interposée radialement entre la première douille (136) et la seconde douille (142).

3. Servomoteur (10) selon la revendication précédente **caractérisé en ce que** la portée (156) tubulaire comporte une lumière (158), débouchant radialement de part et d'autre de ladite portée (156) tubulaire, et débouchant axialement vers l'arrière (160) de la portée (156), qui est destinée à coopérer avec un doigt (162) faisant saillie radialement à l'extérieur de la première douille (136) pour former les premiers moyens (154) de montage à baïonnette et qui est destinée à coopérer avec une nervure (164) faisant saillie radialement à l'intérieur de la seconde douille (142) pour verrouiller lesdits premiers moyens (154) de montage à baïonnette.

4. Servomoteur (10) selon la revendication précédente, **caractérisé en ce que** la lumière (158) comporte :
- une première piste (166), d'une largeur correspondant à la largeur du doigt (162) et/ou de la nervure (164), qui débouche à l'arrière de la portée tubulaire (156) du piston mobile (22),
- une seconde piste (168), communiquant avec la première piste (166), possédant un bord commun (170) avec la première piste, et dont la largeur (L2) correspond au double de la largeur (L1) du doigt (162) ou de la nervure (164), et qui est destiné à recevoir le doigt (162) et la nervure (164) pour verrouiller angulairement ledit doigt (162).

5. Servomoteur (10) selon l'une quelconque des revendications 2 à 4, **caractérisé en ce que** la seconde douille (142) comporte une collerette avant (172) d'extrémité dont la face transversale (148) externe comporte le second élément (150) transversal complémentaire d'étanchéité du clapet (50) axial de rééquilibrage qui est destiné à obturer au moins un conduit (176) de passage traversant la cloison mobile dont l'extrémité arrière (178) comporte le premier élément (134) transversal d'étanchéité du clapet (50) axial de rééquilibrage.

6. Servomoteur (10) selon la revendication précédente, **caractérisé en ce que** la collerette avant (172) comporte, en avant de sa face transversale (148), un bord (180) périphérique annulaire qui reçoit une rondelle (182) immobilisée par l'intermédiaire de seconds moyens (184) de montage à baïonnette.

7. Servomoteur (10) selon la revendication précédente, **caractérisé en ce que** le bord (180) périphérique annulaire de la collerette (172) comporte au moins trois ergots radiaux (185) qui sont tournés vers l'intérieur et qui sont répartis angulairement de manière régulière, et **en ce que** la rondelle (182) comporte au moins trois ergots radiaux complémentaires qui sont tournés vers l'extérieur et qui sont répartis angulairement de manière régulière, pour former les seconds moyens (184) de montage à baïonnette.

8. Servomoteur (10) selon l'une quelconque des revendications précédentes, **caractérisé en ce que** le premier élément d'étanchéité (132) du clapet (52) axial d'admission est constitué de la face transversale arrière (140) extérieure de la première douille (136).

9. Servomoteur (10) selon l'une quelconque des revendications précédentes, **caractérisé en ce que** le second élément d'étanchéité (146) du clapet (52) axial d'admission est constitué d'un joint annulaire fixé sur une face avant (144) interne d'une paroi arrière de la seconde douille (142) tubulaire.

10. Servomoteur (10) selon l'une quelconque des ,revendications 5 à 9, **caractérisé en ce que** le premier élément (134) d'étanchéité du clapet axial de rééquilibrage est constitué d'au moins un pourtour de l'extrémité arrière (178) du conduit de passage (176) traversant la cloison mobile (14).

11. Servomoteur (10) selon l'une quelconque des revendications précédentes, **caractérisé en ce que** l'extrémité arrière (48) du plongeur (46) comporte une portée (186) tronconique convexe qui est destinée à coopérer avec une portée (188) tronconique concave de la première douille pour assurer une position axiale déterminée de fixation de la première douille (136) sur le plongeur (46).

## Claims

1. Pneumatic brake booster (10) for a motor vehicle, of the type which comprises a rigid casing (12) inside which there can move a transverse partition (14) delimiting in a sealed manner a front chamber (16), subjected to a first pressure (P₁), and a rear chamber (18), subjected to a second pressure (P₂) that varies between the first pressure (P₁) and a pressure (Pₐ) higher than the first pressure (P₁), which is able to act on an actuating rod (28) of a master cylinder associated with the booster (10) via a reaction disk (32),
of the type which comprises a tubular moving piston (22) which is slideably mounted in the casing (12) and is secured to the moving partition (14),
of the type which comprises a control rod (38) moving in the piston (22) selectively as a function of an axial input force directed forward against the action of a return force exerted on the rod (38) by a return spring (138),
of the type in which the movements of the control rod (38) are able to determine the openings and closings of at least one axial "inlet" valve (52) which is interposed between a pressure source subjected to the pressure (Pₐ) higher than the first pressure (P₁) and the rear chamber (18) and of at least one axial "re-equalizing" valve (50) that is axially offset with respect to the inlet valve (52), which is interposed between the front chamber (16) and the rear chamber (18), to actuate the moving partition (14),
and of the type in which a plunger (46), slideably mounted in the piston (22), passing through the moving partition (14) and secured to the end of the control rod (38), is able to act directly upon the actuating rod (28) of the master cylinder (13) via the reaction disk (32),
of the type which comprises:
- a first transverse sealing element (132) for the axial inlet valve (52), secured to the rear end (48) of the plunger (46),
- a first complementary transverse sealing element (134) for the axial re-equalizing valve (50), consisting of at least one portion of the rear face (90) of the moving partition (14),
**characterized in that** it comprises:
- a first tubular sleeve (136), fixed around the plunger (46) in the moving piston (22), which is returned elastically away from the moving partition (14), a transverse face (140) of which comprises the first transverse sealing element (132) for the axial inlet valve (52),
- a floating second tubular sleeve (142), surrounding the first sleeve (136), which is axially mobile with respect to the moving piston, which is returned elastically towards the moving partition (14), a rear internal transverse face (144) of which comprises a complementary second sealing element (146) for the axial inlet valve (52), and a front external transverse face (148) of which comprises a complementary external second sealing element (150) for the re-equalizing valve (50),
the first sleeve (136) being slideably mounted in the moving piston (22) with a travel (d) which is determined by first bayonet-fitting means (154) interposed between said first sleeve (136) and the moving piston (22) and which are locked against rotation by the second sleeve (142).

2. Booster (10) according to the preceding claim, **characterized in that** the moving piston (22) comprises a tubular guiding surface (156) interposed radially between the first sleeve (136) and the second sleeve (142).

3. Booster (10) according to the preceding claim, **characterized in that** the tubular surface (156) comprises a slot (158) opening radially on each side of said tubular surface (156) and opening axially towards the rear (160) of the surface (156), which is intended to collaborate with an outwardly radially projecting finger (162) of the first sleeve (136) to form the first bayonet-fitting means (154) and which is intended to collaborate with an inwardly radially projecting rib (164) of the second sleeve (142) to lock said first bayonet-fitting means (154).

4. Booster (10) according to the preceding claim, **characterized in that** the slot (158) comprises:
- a first track (166) of a width corresponding to the width of the finger (162) and/or of the rib (164), which opens to the rear of the tubular surface (156) of the moving piston (22),
- a second track (168), communicating with the first track (166), having an edge (170) in common with the first track and the width (L2) of which corresponds to twice the width (L1) of the finger (162) or of the rib (164) and which is intended to accept the finger (162) and the rib (164) in order to lock said finger (162) angularly.

5. Booster (10) according to any one of claims 2 to 4, **characterized in that** the second sleeve (142) comprises a front end flange (172), the external transverse face (148) of which comprises the complementary second transverse sealing element (150) for the axial re-equalizing valve (50) which is intended to shut off at least one passage duct (176) passing through the moving partition, the rear end (178) of which comprises the first transverse sealing element (134) for the axial re-equalizing valve (50).

6. Booster (10) according to the preceding claim, **characterized in that** the front flange (172) comprises, forward of its transverse face (148), an annular peripheral edge (180) which accepts a washer (182) immobilized by second bayonet-fitting means (184).

7. Booster (10) according to the preceding claim, **characterized in that** the annular peripheral edge (180) of the flange (172) comprises at least three radial stubs (185) which face inwards and are uniformly angularly distributed, and **in that** the washer (182) comprises at least three complementary radial stubs which face outwards and are uniformly angularly distributed to form the second bayonet-fitting means (184).

8. Booster (10) according to any one of the preceding claims, **characterized in that** the first sealing element (132) for the axial inlet valve (52) consists of the exterior rear transverse face (140) of the first sleeve (136).

9. Booster (10) according to any one of the preceding claims, **characterized in that** the second sealing element (146) for the axial inlet valve (52) consists of an annular seal fixed to an internal front face (144) in a rear wall of the tubular second sleeve (142).

10. Booster (10) according to any one of claims 5 to 9, **characterized in that** the first sealing element (134) for the axial re-equalizing valve consists of at least a periphery of the rear end (178) of the passage duct (176) passing through the moving partition (14).

11. Booster (10) according to any one of the preceding claims, **characterized in that** the rear end (48) of the plunger (46) comprises a convex frustoconical surface (186) intended to collaborate with a concave frustoconical surface (188) belonging to the first sleeve in order to provide a given axial position for fixing the first sleeve (136) to the plunger (46).

## Patentansprüche

1. Pneumatischer Servomotor (10) zur Bremsunterstützung für ein Kraftfahrzeug,
vom Typ mit einem starren Gehäuse (12), in dem eine quer verlaufende Trennwand (14) beweglich ist, die in dichter Weise eine vordere Kammer (16), die einem ersten Druck (P₁) ausgesetzt ist, und eine hintere Kammer (18) abgrenzt, die einem zweiten Druck (P₂) ausgesetzt ist, welcher zwischen dem ersten Druck (P₁) und einem Druck (Pₐ) variiert, der höher ist als der erste Druck (P₁), die mittels einer Reaktionsscheibe (32) eine Betätigungsstange (28) eines Hauptzylinders, der dem Servomotor (10) zugeordnet ist, beaufschlagen kann,
vom Typ mit einem beweglichen, rohrförmigen Kolben (22), der gleitend in dem Gehäuse (12) angebracht und fest mit der beweglichen Trennwand (14) verbunden ist,
vom Typ mit einer Steuerstange (38), die sich selektiv in Abhängigkeit von einer axialen Eingangskraft, die nach vorne entgegen einer durch eine Rückstellfeder (138) auf die Stange (38) ausgeübten Rückstellkraft ausgeübt wird, im Kolben (22) bewegt,
vom Typ, bei dem die Bewegungen der Steuerstange (38) die Öffnungs- und Schließvorgänge mindestens eines axialen Ventilelements (52), genannt "Einlassventilelement", das zwischen einer Druckquelle, die dem Druck (Pₐ) ausgesetzt ist, welcher höher ist als der erste Druck (P₁), und der hinteren Kammer (18) angeordnet ist, und mindestens eines axialen Ventilelements (50), genannt "Ausgleichsventilelement", das in Bezug auf das Einlassventilelement (52) axial versetzt und zwischen der vorderen Kammer (16) und der hinteren Kammer (18) angeordnet ist, bestimmen können, um die bewegliche Trennwand (14) zu betätigen,
und vom Typ, bei dem ein Tauchkolben (46), der gleitend in dem Kolben (22) angebracht ist, die bewegliche Trennwand (14) durchquert und fest mit dem Ende der Steuerstange (38) verbunden ist, die Betätigungsstange (28) des Hauptzylinders (13) mittels der Reaktionsscheibe (32) direkt beaufschlagen kann,
vom Typ, der Folgendes aufweist:
- ein erstes quer verlaufendes Dichtelement (132) des axialen Einlassventilelements (52), das mit dem hinteren Ende (48) des Tauchkolbens (46) fest verbunden ist,
- ein erstes quer verlaufendes, komplementäres Dichtelement (134) des axialen Ausgleichsventilelements (50), das aus mindestens einem Teilstück der hinteren Fläche (90) der beweglichen Trennwand (14) gebildet ist,
**dadurch gekennzeichnet, dass** er Folgendes aufweist:
- eine erste, rohrförmige Hülse (136), die im beweglichen Kolben (22) um den Tauchkolben (46) befestigt ist, entgegen der beweglichen Trennwand (14) elastisch zurückgestellt wird und bei der eine quer verlaufende Fläche (140) das erste quer verlaufende Dichtelement (132) des axialen Einlassventilelements (52) aufweist,
- eine zweite, schwimmende, rohrförmige Hülse (142), die die erste Hülse (136) umgibt, in Bezug auf den beweglichen Kolben axial beweglich ist, elastisch zur beweglichen Trennwand (14) zurückgestellt wird und bei der eine hintere quer verlaufende Innenfläche (144) ein zweites komplementäres Dichtelement (146) des axialen Einlassventilelements (52) aufweist und eine vordere quer verlaufenden Außenfläche (148) ein zweites, äußeres, komplementäres Dichtelement (150) des Ausgleichsventilelements (50) aufweist,
wobei die erste Hülse (136) so angebracht ist, dass sie in dem beweglichen Kolben (22) gemäß einem Weg (d) gleitet, der durch erste Bajonett-Montagemittel (154) bestimmt ist, die zwischen der ersten Hülse (136) und dem beweglichen Kolben (22) angebracht und durch die zweite Hülse (142) in Drehung blockiert sind.

2. Servomotor (10) nach dem vorhergehenden Anspruch, **dadurch gekennzeichnet, dass** der bewegliche Kolben (22) einen rohrförmigen Führungsbereich (156) aufweist, der radial zwischen der ersten Hülse (136) und der zweiten Hülse (142) angeordnet ist.

3. Servomotor (10) nach dem vorhergehenden Anspruch, **dadurch gekennzeichnet, dass** der rohrförmige Bereich (156) eine Öffnung (158) aufweist, die radial auf der einen und auf der anderen Seite des rohrförmigen Bereichs (156) mündet und axial zum hinteren Teil (160) des Bereichs (156) mündet, die dazu vorgesehen ist, mit einem Zapfen (162) zusammenzuwirken, der radial außerhalb der ersten Hülse (136) hervorragt, so dass die ersten Bajonett-Montagemittel (154) gebildet sind, und die dazu vorgesehen ist, mit einer Rippe (164) zusammenzuwirken, die radial in der zweiten Hülse (142) hervorragt, um die ersten Bajonett-Montagemittel (154) zu verriegeln.

4. Servomotor (10) nach dem vorhergehenden Anspruch, **dadurch gekennzeichnet, dass** die Öffnung (158) Folgendes aufweist:
- eine erste Bahn (166), deren Breite der Breite des Zapfens (162) und/oder der Rippe (164) entspricht und die im hinteren Teil des rohrförmigen Bereichs (156) des beweglichen Kolbens (22) mündet,
- eine zweite Bahn (168), die mit der ersten Bahn (166) verbunden ist, die einen gemeinsamen Rand (170) mit der ersten Bahn aufweist, deren Breite (L2) der doppelten Breite (L1) des Zapfens (162) oder der Rippe (164) entspricht und die dazu vorgesehen ist, den Zapfen (162) und die Rippe (164) aufzunehmen, um den Zapfen (162) winkelmäßig zu verriegeln.

5. Servomotor (10) nach einem der Ansprüche 2 bis 4, **dadurch gekennzeichnet, dass** die zweite Hülse (142) einen vorderen Endkragen (172) aufweist, dessen quer verlaufende Außenfläche (148) das zweite quer verlaufende, komplementäre Dichtelement (150) des axialen Ausgleichsventilelements (50) aufweist, das dazu vorgesehen ist, mindestens eine Durchlassleitung (176) zu verschließen, die die bewegliche Wand durchquert und deren hinteres Ende (178) das erste quer verlaufende Dichtelement (134) des axialen Ausgleichsventilelements (50) aufweist.

6. Servomotor (10) nach dem vorhergehenden Anspruch, **dadurch gekennzeichnet, dass** der vordere Kragen (172) vor seiner quer verlaufenden Fläche (148) einen ringförmigen Umfangsrand (180) aufweist, der eine Scheibe (182) aufnimmt, die mit zweiten Bajonett-Montagemitteln (184) blockiert ist.

7. Servomotor (10) nach dem vorhergehenden Anspruch, **dadurch gekennzeichnet, dass** der ringförmige Umfangsrand (180) des Kragens (172) mindestens drei radiale Nasen (185) aufweist, die nach innen gerichtet und winkelmäßig gleichmäßig verteilt sind, und die Scheibe (182) mindestens drei komplementäre radiale Nasen aufweist, die nach außen gerichtet und winkelmäßig gleichmäßig verteilt sind, um die zweiten Bajonett-Montagemittel (184) zu bilden.

8. Servomotor (10) nach einem der vorhergehenden Ansprüche, **dadurch gekennzeichnet, dass** das erste Dichtelement (132) des axialen Einlassventilelements (52) aus der quer verlaufenden hinteren Außenfläche (140) der ersten Hülse (136) gebildet ist.

9. Servomotor (10) nach einem der vorhergehenden Ansprüche, **dadurch gekennzeichnet, dass** das zweite Dichtelement (146) des axialen Einlassventilelements (52) aus einer Ringdichtung gebildet ist, die an einer vorderen Innenfläche (144) einer hinteren Wand der zweiten rohrförmigen Hülse (142) befestigt ist.

10. Servomotor (10) nach einem der Ansprüche 5 bis 9, **dadurch gekennzeichnet, dass** das erste Dichtelement (134) des axialen Ausgleichsventilelements zumindest aus einem Umfang des hinteren Endes (178) der Durchlassleitung (176), die die bewegliche Trennwand (14) durchquert, gebildet ist.

11. Servomotor (10) nach einem der vorhergehenden Ansprüche, **dadurch gekennzeichnet, dass** das hintere Ende (48) des Tauchkolbens (46) einen konvexen kegelstumpfartigen Bereich (186) aufweist, der dazu vorgesehen ist, mit einem konkaven kegelstumpfartigen Bereich (188) der ersten Hülse zusammenzuwirken, um eine vorbestimmte axiale Stellung zur Befestigung der ersten Hülse (136) am Tauchkolben (46) zu gewährleisten.
